# EUROPEAN PATENT APPLICATION

(11) **EP 4 811 330 A1**
(43) Date of publication of application: **23.09.2026**
(21) Application number: 26160230.4
(22) Date of filing: 23.02.2026
(51) Int. Cl.: G09B 5/00

(54) **COMPUTER-IMPLEMENTED METHOD AND SYSTEM FOR GENERATING PERSONALIZED TRAINING**

(30) Priority: 17.03.2025 PL 45148925
(71) Applicant: Uniwersytet Ekonomiczny W Poznaniu, 61-875 Poznan (PL)
(72) Inventor: Sobocinski, Pawel, Lomza (PL); Walczak, Krzysztog, Poznan (PL); Flotynski, Jakub, Poznan (PL)
(74) Representative: AOMB Polska Sp. z.o.o.

(57) **Abstract**

The subject-matter of the invention is a computer implemented method and system for creating of personalized trainings in virtual reality (VR), which enable adjusting of the training content according to the individual needs of the user based on analysis of his/her earlier training sessions.

A computer implemented method for generating of personalized trainings comprising the following steps: describing at least one object in a training module (2) as a finite state machine; loading of a testing scenario (7) or scenario (6) into the calculating unit (2); recording of the data **(11)** about the course of the scenario executed by the user (4); assigning the data **(11)** about the course of the scenario with the group data (8) or individual data (9) in a base (5) of the course of the scenarios; transmitting from the base (5) of the course of the scenarios to an analytic module of group data (8) or individual data (9); identifying of the probability of making an error for at least one action performed by the user in the scenario (6) or test scenario (7); calculating, by the analytic module (1), of the maximum probability (10) of making errors in a sequence of actions performed by the user (4); maximizing the level of difficulty of the actions and generating of a scenario (6) with the use of the generating module (3).

## Description

### Field of the Invention

The invention provides a computer implemented method and system for generating of personalized virtual reality (VR) trainings, to enable the training content to be tailored according to the individual needs of the user based on the analysis of his/her earlier training sessions.

### Prior Art

Known prior art VR solutions include interactive environments which enable simulation of realistic training scenarios in which the participants may perform actions without exposing themselves to the risks or costs accompanying the traditional training methods. In various fields, such as medicine, manufacturing industry, energy industry, and uniformed services, VR training is becoming increasingly common and enable practical learning and skill development in a controlled and safe environment.

Comparison of VR training versus the traditional methods of training carried out by an instructor shows that the VR training systems lack in individual approach corresponding to the particular needs of the person being trained. Each user has his/her own unique prior experience and skills which determine the training needs. This is why some of the tasks may be more problematic for a particular user and this generates a need to focus at the specific task type, e.g. to increase the frequency for some specific actions. Therefore, there is a need for a training scenario adjustable according to the needs of the individual users.

Presently, there are numerous employee training systems available which use virtual reality, nevertheless, the majority of them has a static scenario and does not allow for a change in the pre-programed scenario or selects one of some previously prepared scenarios of a configuration thereof for the user.

In the India patent application IN 202311069285 A, makes is possible to adjust a training scenario, in real time, based on the users' reactions. This solution is limited to fire drills and adjusts some pre-created scenarios, and it does not generate any new scenarios with other actions selected specifically for the user.

US patent application US20150310758A1 describes a solution in the field of driving training and adjust the training by selection of one of earlier prepared training scenarios while it generates no new unique set of actions to be performed.

US patent application US20220415200A1 uses artificial intelligence to create new e-learning scenarios based on the user characteristics. The system described there is not intended for virtual reality, and it does not modify the three-dimensional virtual environment.

Japanese patent application JP2007264055A describes a training method in which the training simulation is adjustable according to the user based on his/her biological reactions. The training scenarios consist of numerous pre-created scenes, and each of them has different options which may be adjusted dynamically if the biological reactions meet a predetermined condition for a given option.

Presently, there does not exist any comprehensible method to enable creating customizable virtual training environments which would be independent of the training subject-matter and the level of the programming skills of the user. There is no system that would automatically adapt the virtual scene to completely new training scenarios generated individually for the needs of each trainee. Current solution requires prior preparation of numerous versions for scenes or scenarios which are only matched for the user instead of generating dynamically new scenarios and adapting of a single training scene.

VR technology keeps developing. Moreover, a continuously growing offer of VR hardware and tools for generating contents combined with considerable reduction of prices cause that VR training becomes more and more accessible for diverse groups of recipients. As a consequence, VR trainings offer promising prospects for future trainings of employees and for education, while enabling learning and improving skills in an effective manner.

A problem related to generating personalized VR training is identification of the needs of a particular user involved. In order to prepare a new training scenario suitable for the current state of the knowledge and skills of the user, a method is necessary to enable identification of the training elements which cause or may cause problems for the user. The task of analysis of the course of earlier trainings may be divided into two sub-tasks. The first one involves providing of a method for recording data concerning the user and the training, preferably from the VR, and this approach causes generation of a large amount of data. Therefore, it is necessary to determine which data should be recorded and how this should be done in order to enable further effective processing of such data. The second task concerns the manner of processing the obtained data.

### Summary of the Invention

It is the object of the invention to develop a system and method for generating personalized trainings in a VR environment which enable providing of the training content in a manner that corresponds to the preferences and learning style of each user. Personalized VR trainings may be more effective than traditional training methods. Adjustment of the contents and course of the training according to the individualized needs and skills of the user causes better knowledge retention and faster obtaining of the training goals.

The first aspect of the invention concerns a computer implemented method for generating of personalized trainings. The method comprises steps of describing of at least one object in a training module as a finite state machine, wherein each object is described by at least a set of possible states and rules for transition between the object states, wherein each transition between the states is carried out based on the transition rules declared in the finite state machine model, and wherein a change in the object state may be carried out via an action performed by the user or another object present in the virtual scene; loading of a testing scenario or a scenario into a calculation model, wherein the scenario comprises information concerning assigning of the actions with the objects, assigning of the actions with the object states, and a possible sequence in which the actions are performed; recording data about the course of the scenario executed by the user, by recording at least one parameter collected during executing the scenario or test scenario into a base of the course of the scenario and into an analytic module; assigning the data about the course of the scenario with the group data or individual data in the base of the course of the scenarios; transmitting of the group data or individual data from the base of the courses of the scenarios to the analytic module; identifying the probability of making an error for at least one action performed by the user in the scenario or test scenario, with the use of the analytic module using machine learning; calculating by the analytic module of the maximum probability of making an error for a sequence of actions performed by the user; maximizing of the level of difficulty of the actions and generating a scenario with the use of a generating module via finding of a path in the graph which has a maximum sum of probabilities of making an error.

Preferable data of the course of the scenario comprise at least one parameter from the list of: position of the head of the user, orientation of the head of the user, position of hands of the user, state of the objects, interaction of the user with the objects, errors made by the user, actions performed by the user.

Preferably, identifying of the probability of making an error for at least one action performed by the user in the scenario or test scenario, with the use of the analytic module using machine learning, is calculated based on at least one of the following information: probability of making an error by the user in earlier attempts to perform a particular action, assigning an action as being similar to some other action, duration time of performing of the action, number of executed interactions, length of the covered path, duration time of the action performed by a reference user, number of interactions performed by the reference user, length of the path covered by the reference user, duration time of the action performed by other users, number of performed by other users, length of the path covered by other users, probability of making and error in the action by the users assigned to the same group as the user which executes the scenario or personalized scenario, probability of making a mistake in a sequence of actions.

A second aspect of the invention is a system for generating of personalized trainings. The system comprises a data store comprising a test scenario comprising a list of actions which should be performed by the user in the training scene. The system also comprises a training module suitable to generate a VR scene based on the test scenario or scenario and arranged to generate data about the course of the scenario comprising at least one parameter of: position of the head of the user, orientation of the head of the user, position of the hands of the user, state of the objects, interaction of the user with the objects, errors made by the user, actions performed by the user, and the tools used to describe objects in a virtual scene as a finite state machine, wherein each object is described with the use of a set of possible states and rules for transitions between the objects states, wherein each transition between the states is carried out based on the rules for transition, wherein a change in the object state may be effected via an action performed by the user or another object present in the virtual scene. The system also comprises a base of the courses of the scenarios, configured to record the data about the course of the scenario for the user and to group the collected data about the course of the scenario as group data or individual data. The system also comprises an analytic module configured to calculate the probability of making an error in a sequence of actions performed by the user with the use of machine learning based on at least one of the parameters: data about the course of the scenario, group data, or individual data.

Additionally, the system comprises a generating module configured to generate a new scenario based on the probability of making an error in a sequence of actions performed by the user, via selecting a sequence of actions for which the sum of probabilities of making an error is the highest.

### Brief Description of the Drawings

The invention will be presented more closely with reference to the enclosed drawing in which:

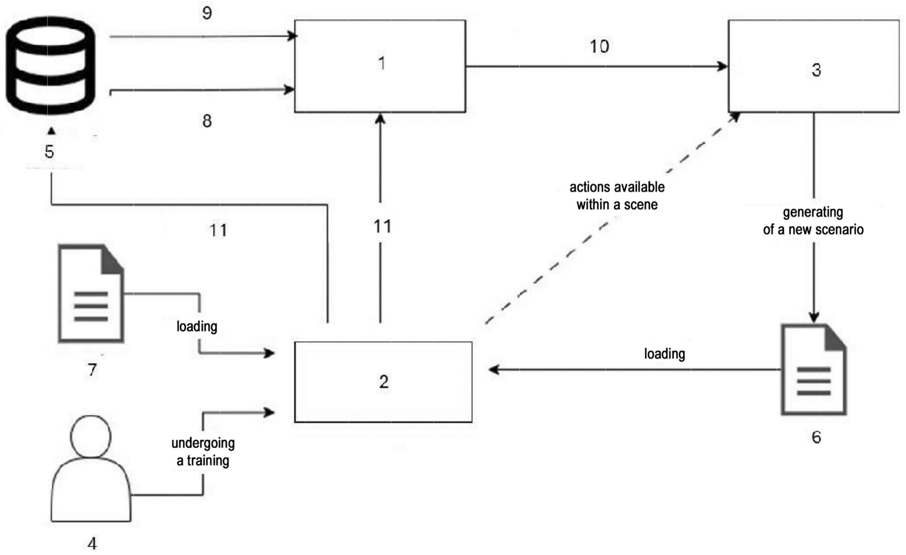

Fig. 1 shows a block diagram of a system for generating virtual VR scenarios.

### Detailed Description of Preferable Embodiments

A method for generating of new training scenarios 6 according to the invention begins with preparation of the training scene, i.e. adding and describing of objects in the training scene in a training module 2. The training scene comprises at least one object in a virtual scene in the training module 2 along with assigned thereto possible states and rules for transitions between the states. Each transition between the states of the object is effected based on the rules for transitions between the states which form a finite state machine model. Each change in the state of the object may be effected via an action of the user 4, a person who supervises the training, or via and action of some other object present in the virtual scene. There are numerous methods to enable preparing of such a scene. According to an embodiment such a scene is preferably created with the use of a 2D or 3D game engine, such as Unity, Unreal Engine, Godot or others. The objects in the scene comprise information concerning whether they may interact with the user 4, about their names, about the hierarchy of the objects, about the possible states of a particular object, and about what happens after a change in the state of a given object, for example: a change in the position, rotation, texture, a sound output, and how the change in the state of a particular object affects other objects. Hierarchy of the objects is understood as a mutual relationship between the objects composed of other objects.

Such description is developed with the use of an additional tool implemented in the scene editor of the graphics engine. The person who creates the training preferably selects an object in the scene and defines for example:
- Object name
- Object ID
- Number of states of a given object including:
   ∘ State name
   ∘ State ID
   ∘ Changes occurring in the object after transition into a prticular state, e.g. change in the position, rotation, scale, material, changes in the states of other objects, list of other events in the scene
   ∘ Rules for transition between the states, i.e. establishing the states into which a given state may be transitioned
- List of actions which may be performed by the user 4 on a particular object, comprising:
   ∘ Action name
   ∘ Action ID
   ∘ Action group
   ∘ State before
   ∘ State after
   ∘ Required preceding actions

With the objects so described, the lists of states form finite state machine models, and the lists of actions form directed graphs of actions.

This enables detailed description of devices, machines, tools and other objects within the virtual scene which consequently reflect their real equivalents. This approach enables describing of the operation of the devices and objects regardless of their field of application and allows for a flexibility with regard to the level of specificity of the description of a given device and the functions thereof. The person who controls the scenario, being a person skilled in the relevant art and with no experience in creation of training scenarios, will be able to describe properly a virtual training scene along with its object with the use of tools and with the use of a method according to the invention.

Due to the use of the finite state machine model, the system for generating of personalized trainings may precisely reproduce operation of both individual devices and entire structures of mutually connected machines. The system may track and control changes occurring in the training scenario according to the rules of operating of their real equivalents, which is indispensable in the training process, and correspondingly adjust the virtual scene suitably to a specific training scenario without involvement of the user 4 or the training supervising person in the structure of the training scene. This also makes it possible to record and visualise changes occurring in the scene during the training as well as the progress of the user 4 in the course of the training.

With the virtual scene so created, actions comprised by the test scenario 7 which may be performed on the individual objects are described. Actions are introduced with the use of a training module 2. An action is described according to an action model and it comprises at least a name, a reference to the object on which a given actin is performed, and a reference to the states of the object (the state before the action is performed and the state after the action becomes performed). Based on this, preferably a graph of the actions is generated wherein the actions are represented as peaks while the edges represent the possible sequence in which they may be performed. In this manner a directed graph is created which may provide basis for creation of new test scenarios 6 comprising further actions. Due to this, the scenarios 6 thus generated maintain factual correctness and enable creation of different training paths - new training scenarios 6, automatically and without any additional intervention by the user 4 or additional person who supervises the training. Preferably, when defining the training environment, the person who creates the test scenario 7 defines all the actions that may be performed within the scene, and the test scenario 7 may consist of only some of the actions, e.g. the ones assigned to one machine/device/group of devices.

Additionally, in order to facilitate the use, actions may be grouped into activities. The test scenario 7 is to be understood as an initially created scenario, i.e. a list of declared actions constituting input data which are modified in further steps in order to create a personalized scenario 6. The personalized scenario 6 generated with the method described in the invention may constitute input data to generate further personalized scenarios 6.

Based on the described set of available actions, further actions are selected which create a scenario. The developed test scenario 7 or personalized scenario 6 is further loaded into an earier prepared adaptable training scene.

The user 4 undergoes a VR training in a training module 2 according to the test scenario 7 or personalized scenario 6. The system records the data about the course of the scenario 11 comprising at least one parameter. The latter being for example: time, position, head orientation, and position of the hands of the person being trained, details of the interactions of the user 4 within the scene, errors made by the user 4, actions performed by the user 4, duration time of the actions performed by the user 4, etc. All the data about the course of the scenario 11 are transmitted to a base 5 of the course of scenarios and an analytic module 1.

The base 5 of the course of scenarios preferably assigns and groups the data 11 about the course of a scenario with the earlier courses of simulations for a given user 4 as individual data 9, or to a group of users 4 as group data 8. Assigning of the data 11 about the course of a scenario with the group data is carried out, for example, based on similar experience of the users 4, similar kinds of errors made by the users 4 or some other parameters.

Next, thus obtained data 11 about the course of the scenario are read into the analytic module 1 which uses machine learning. The analytic module 1 is configured to analyse the individual data 9 of the user 4 for whom a scenario 6 is to be generated or the group data 8 about the courses for the groups or users 4. This enables analysis of the course of the training which additionally makes it possible to: determine correctness of the executed action via such measures as: duration time, number of interactions, number of errors made, length of the covered distance. Assigning of the user 4 with a group of users 4 which is characterized by the manner in which the actions are performed or in which the errors are made. Finding out the of the sequences and relationships between the individual occurred interactions and errors within the scene. Evaluating of the progress based on the data from the earlier course of the same user 4 or group of users 4.

Further on, the analytic model, based on the data 11 about the course of the scenario collected from the training, calculates the probability 10 of making mistakes in specific actions by the user 4 or group of users 4. For this purpose techniques are applied which use machine learning techniques to enable analysis of the data 11 about the course of the scenario both for a specific user 4 and groups of users 4. The use of artificial intelligence enables analysis of large sets of data which are generated as a result of the use of a VR system and detection of patterns which may be used for the purpose of evaluation and adjusting of the training suitably to a specific user 4.

Calculation of probability consists on analysis of several aspects of virtual training, inter alia on:
- Increasing of the probability of making an error if the user 4 made an error in an earlier attempt to perform a given action and decrease of such probability if he/she made it earlier than that, e.g. two attempts earlier.
- Calculating of an average probability of making an error in an action which is defined as a similar action.
- Calculating of the duration time of the action, numbers of interactions occurred, length of the covered path and calculating, based on these data, of a normalized factor based on the average and standard deviations for other users 4 or on reference data, and then increasing of the risk of making an error based on deviations of the measured data from the reference data or other users 4.
- Assigning of a given user 4 with a given group of users 4 with the use of machine learning techniques and increasing of the probability of making an error in a specific action, if the assigned group of users 4 has a high probability of making an error in the specific action.
- Calculating of the probability of making an error based on the sequence of actions and relationship of performing of actions by different users 4 with the use of machine learning techniques. For example, increasing of the probability of making an error in the action numbered as seven, if the user 4 made an error in the action numbered as five.

Final probability of making an error for a given action takes into account individually all or selected of the above parameters.

Probability 10 of making errors in specific actions is then applied to the previously created graph of actions. The higher the probability of making an error in an action, the higher the value at the peak with the action. The data concerning the probability of making errors are transmitted to a generating module 3. Generating of a new scenario 6 in the generating module 3 preferably consists on finding of an optimal path in the graph with the use of methods known in the prior art. The person who controls the scenario has an additional possibility of selecting of the initial and final actions and selecting of actions which in his/her opinion have to be included in the new scenario 6. The actions which are parts of the found path create the new scenario 6.

The new scenario 6 is then read into the training module 2 which is adjusted accordingly via a change of the states of the objects while maximizing the probability of making an error in actions performed by the user 4. Generating of a scenario consists on finding of an optimal path to maximize the probability of making an error for the entire scenario. The algorithm seeks for a path between two peaks in the graph where the sum of probabilities is the highest. Such path is a new scenario.

Due to this the user 4 may undergo a new personalized training 6. New data collected during the scenario may be used for creating a further scenario 6. The scenario 6 is generated automatically based on the data about the course of the scenario 11 collected for the user 4 during all or selected earlier scenarios 6 without any necessity for involvement of the person who carries out the training.

The method of the invention may be applicable in training in diverse fields, e.g. in the manufacturing industry, in the energy industry, in medicine and in vocational education.

### Reference Numerals:

- 1 -: analytic module
- 2 -: training module
- 3 -: generating module
- 4 -: user
- 5 -: base of the course of scenarios
- 6 -: scenario
- 7 -: testing scenario
- 8 -: group data
- 9 -: individual data
- 10 -: probability of errors
- 11 -: data about the course of scenarios

## Claims

1. A computer implemented method for generating of personalized trainings, comprising the following steps:
- describing of at least one object in a training module (2) as a finite state machine, wherein each object is described by at least a set of possible states and rules for transition between the object states, wherein each transition between the states is carried out based on the transition rules declared in the finite state machine model, and wherein a change in the status of the object may be effected via an action of a user (4) or some other object present within the virtual scene;
- loading of a test scenario (7) or scenario (6) into the calculation module (2), wherein the scenario comprises information concerning the assignments of the actions with the objects, assignment of the actions with the states of the object and a possible sequence of the actions to be performed;
- recording of the data (11) about the course of the scenario executed by the user (4), via recording of at least one parameter collected during execution of the scenario (6) or test scenario (7) into the base of the course of the scenarios (7) and an analytic module (1);
- assigning of the data (11) about the course of the scenario with group data (8) or individual data (9) in the base (5) of the courses of scenarios;
- transmitting, from the base (5) of the course of the scenarios to the analytic module, of the group data (8) or individual data (9);
- determining of the probability of making an error in at least one action performed by the user in the scenario (6) or test scenario (7) with the use of the analytic module (1) using machine learning;
- calculating, by the analytic module (1), of the maximum probability of making an error (10) in a sequence of actions performed by the user (4);
- maximizing of the difficulty level of the actions and generating of a scenario (6) with the use of a generating module (3), via finding of a path in the graph with the maximum sum of probabilities of making an error.

2. The method according to claim 1 wherein the data (11) of the course of the scenario comprise at least one parameter from the list comprising: position of the head of the user, orientation of the head of the user, position of the hands of the user, state of the objects, interaction of the user with the objects, errors made by the user, actions performed by the user.

3. The method according to claims 1 or 2, wherein determining of the probability of making an error in at least one action performed by the user in the scenario (6) or test scenario (7) with the use of the analytic module (1) using machine learning is calculated based on at least one of the following information:
probability of making an error by the user (4) in earlier attempts to perform an action,
assigning of the action as a similar one to some other action,
duration time of performing of the action, number of occurred interactions, length of the covered path, duration time of performing of the action by a reference user, number of occurred interactions of the reference user, length of the path covered by the reference user,
duration time of performing of the actions by other users (4), number of actions performed by other users (4), length of the path covered by other users (4),
probability of making an error by the users (4) assigned with the same group as the user 4 who is executing the scenario (6) or personalized scenario (7),
probabilities of making errors in a sequence of actions.

4. System for generating of personalized trainings comprising:
- a data store comprising a test scenario (7) and comprising a list of actions which should be performed by the user within a training scene;
- a training module (2) arranged to generate a VR scene based on the test scenario (7) or scenario (6) arranged to generate data (11) about the course of the scenario comprising at least one of the parameters: position of the head of the user, orientation of the head of the user, position of the hands of the user, state of the objects, interaction of the user with the objects, errors made by the user, actions performed by the user and with the tools used for description of the objects within the virtual scene as a finite state machine, wherein each object is described with the use of a set of possible states and rules for transitions between the states of the objects, wherein each transition between the states is effected based on the rules for transition, wherein a change in the object state may be carried out via an action performed by the user or another object present within the virtual scene;
- a base (5) of the courses of the scenarios configured to record data (11) about the course of the scenario performed by the user (4) and to group the collected data (11) about the course of the scenario as group data (8) or individual data (9);
- an analytic module (1), configured to calculate the probability (10) of making an error in a sequence of actions performed by the user (4) with the use of machine learning based on at least one of the parameters: data (11) about the course of the scenario, group data (8) or individual data (9);
- a generating module (3), configured to generate a new scenario (6) based on the probability (10) of making an error in a sequence of actions performed by the user, via selecting actions for which the sum of probabilities of making errors is the highest.
